# EUROPEAN PATENT APPLICATION

(11) **EP 3 379 073 A1**
(43) Date of publication of application: **26.09.2018**
(21) Application number: 17290041.7
(22) Date of filing: 20.03.2017
(51) Int. Cl.: F03B 3/10, F03B 15/18

(54) **INSTALLATION FOR CONVERTING HYDRAULIC ENERGY INTO ELECTRICAL ENERGY WITH A FIXED NOMINAL SPEED HYDRAULIC MACHINE AND A VARIABLE FREQUENCY DRIVE IN TRANSIENT REGIME AND CORRESPONDING METHOD**

(71) Applicant: GE Renewable Technologies, 38100 Grenoble (FR)
(72) Inventor: GUILLAUME, Renaud, 38100 Grenoble (FR); FOGGIA, Theophane, 38100 Grenoble (FR); ALLOIN, Quentin, 38100 Grenoble (FR)
(74) Representative: Brannen, Joseph Waclaw

(57) **Abstract**

Installation for converting hydraulic energy into electrical energy, provided with a fixed speed hydraulic machine comprising a pump-turbine (2) linked to a generator (20) by a shaft.

The installation further comprises:
an electrical torque actuator (34) to establish a circuit with the generator (20),
electrical torque actuator connection means (35) for connecting the generator (20) the electrical torque actuator, and
command means (29) for detecting a disconnection of the generator (20) from the grid, and for commanding the electrical torque actuator connection means (35) to connect the generator (20) to the electrical torque actuator (34).

## Description

The invention relates to a method of command of a hydraulic machine and more particularly of a reversible hydraulic machine with S-characteristics. Typical hydraulic machines with S-characteristics are variety of hydro-power plants having a reversible pump-turbine that exhibits S-shaped characteristics in a turbine operation region. The invention also concerns an installation for converting hydraulic energy into electrical energy, in which this method can be implemented.

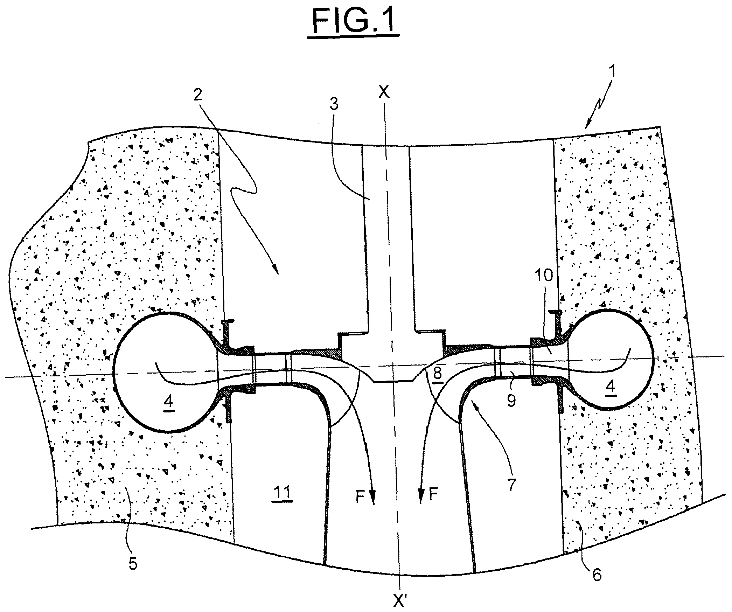

Reference is first made to figure 1 which represents an installation 1 for converting hydraulic energy into electrical energy with S-characteristics comprising a hydraulic machine. In the example, this hydraulic machine is a pump-turbine 2 that uses, in a turbine mode, hydraulic energy to set a shaft 3 in rotation. The shaft 3 is coupled to the rotor of a generator having an alternator that converts mechanical energy of the rotating rotor into electrical energy.

Here-below, the functioning of the pump-turbine 2 is described in the turbine mode. The pump-turbine 2 includes a volute 4 that is supported by concrete blocks 5 and 6. For example, a non-represented penstock extends between a non-represented upstream reservoir and the volute 4. This penstock generates a forced water flow F to power the machine 2, said water flow is released to a non-represented downstream reservoir.

The machine 2 includes a runner 7 coupled to the shaft 3 that is surrounded by the volute 4 and that includes blades 8 between which water flows in operating conditions. As a result, the runner 7 rotates around an axis x-x' of the shaft.

A distributor is arranged around the runner 7. It includes a plurality of movable guide vanes 9 that are evenly distributed around the runner 7. A pre-distributor is disposed upstream of and around the distributor. The pre-distributor is formed by a plurality of fixed vanes 10 evenly distributed around the axis of rotation x-x' of the runner 7.

A suction pipe 11 is disposed below the runner 7 and is adapted to evacuate water downstream.

The movable guide vanes 9 of the distributor have each an adjustable pitch around an axis parallel to the axis of rotation x-x' of the runner 7. Consequently, they may be swiveled to regulate the water flow rate. In a non-represented variant, an additional water flow regulation device may be located at the junction of the upstream penstock and the entrance of the volute, or in the suction pipe 11.

During normal operation, the water flow through the blades 8 generates rotational motion in the runner 7, and in the rotor of the generator, that is linked to the runner through the shaft 3. The generator and the alternator generate electrical energy and are coupled to the grid.

The electrical energy generated in the generator can be injected in the grid once its frequency matches the frequency of the grid. It is to be noted that the frequency depends solely on the rotational speed of the rotor.

As soon as the electrical energy generated is injected into the grid, a torque opposed to the rotation of the blades is generated into the rotor as an expression of the electromotive force linked to the electrical energy injected into the grid. This torque is effectively a braking torque.

After a transition of the operating mode of the hydraulic unit in turbine mode, the hydraulic unit reaches a steady state during which equilibrium is reached between the hydraulic force and the electromotive force, implying a steady rotational speed of the rotor.

In the event of a disconnection of the hydraulic unit from the grid, the circuit connecting the generator and the grid is opened (i.e. by circuit breakers or tripped electrical protection). The electromotive force then disappears; leading to a loss of the equilibrium and an increase of the rotor speed until the movable guide vanes 9 and/or the water flow regulation device are closed. In the meantime, the increased rotor speed leads to increased pressure upstream of the turbine and decreased pressure downstream of the turbine, the latter potentially leading to vacuum formation.

Thanks to safety margins, parts of the hydraulic unit is sized to handle such an overspeed, overpressure and pressure drop, resulting in increased size and cost of the unit.

There is a need for a reduction of overspeed, overpressure and pressure drop in case of unit trip to decrease said cost and size.

The invention thus proposes a method for limiting the rotational speed on a hydraulic machine. The hydraulic machine may be a fixed speed hydraulic machine. The method may be performed during transition of the operating mode, preferably following the disconnection of the hydraulic machine from the grid. The hydraulic machine may comprise a pump-turbine linked to a generator by a shaft and may comprise a distributor having a plurality of movable guide vanes feeding the pump-turbine.

The method may comprise the steps of
a) detecting a disconnection of the generator from the grid; and/or
b) connecting the generator to an electrical torque actuator by switching electrical torque actuator connection means to a conducting state.

To detect a disconnection of the generator from the grid, a voltage drop at the terminals of the generator may be measured by either a voltage sensor or a resistor connected in series with a current sensor. Alternatively, a signal may be received which is linked to a default in the connection between the generator and the grid.

To detect a disconnection of the generator from the grid, a control signal may be received from a differential protection device, or from a human operated switch, and a disconnection of the generator from the grid is determined if the control signal matches a predefined value.

The electrical torque actuator may be a variable frequency drive or a static frequency converter, connected to the generator.

The electrical torque actuator may be a battery connected to the generator.

The electrical torque actuator may comprise a variable frequency drive and a battery, wherein the static frequency converter and the battery are both connected to the generator.

Another aspect of the invention is an installation for converting hydraulic energy into electrical energy, which may be provided with a fixed speed hydraulic machine comprising a pump-turbine linked to a generator by a shaft.

The installation may further comprise:
an electrical torque actuator to establish a circuit with the generator; and/or
electrical torque actuator connection means for connecting the generator to the electrical torque actuator; and/or
command means for detecting a disconnection of the generator from the grid and for commanding the electrical torque actuator connection means to connect the generator to the electrical torque actuator.

The electrical torque actuator may be a variable frequency drive connected to the generator.

The electrical torque actuator may be a battery connected to the generator.

The electrical torque actuator may comprise a variable frequency drive and a battery, wherein the static frequency converter and the battery are both connected to the generator.

Other features and advantages will become apparent from the following description, given only by way of example, in view of the following drawings in which:
- Figure 1 is a schematic section of an installation for converting hydraulic energy into electrical energy comprising a pump-turbine, and
- Figure 2 is a schematic drawing of a hydraulic installation for limiting the rotational speed of the hydraulic machine included therein.

A pump-turbine 2 as illustrated by Figure 1 is able to start in turbine mode without any external device. The hydraulic flow provides indeed a motor torque that enables the pump-turbine speed to reach the synchronous speed, required to match the frequency of the grid, without external power. In pump mode, the flow cannot provide this motor torque and a variable frequency drive is used to power the pump-turbine 2 and ramp up its speed up to the synchronous speed. The grid can then be directly connected to the pump-turbine.

The inventors have had the idea to restore the electrical braking torque in the rotor so as to limit the overspeed during transition of the operating mode, such as during disconnection from the grid, and before the guide vanes and/or the water flow regulation devices are closed. The limitation of rotor speed directly impacts the overpressure upstream of the pump-turbine and the pressure drop downstream.

As described above, the disconnection of the generator from the grid leads to an opened circuit, wherein no current flows and no voltage drop is present. Restoring an electrical braking torque implies to restore a voltage drop and current in the stator of the generator linked to the pump-turbine 2. It can be achieved by establishing a circuit with an electrical torque actuator able to withstand the current and voltage drop generated by connection to said hydraulic machine operated as a fixed speed turbine, or any fixed speed hydraulic turbine. Circuit breakers are open and/or closed to switch between the regular connection to the grid and the connection to the electrical torque actuator in emergency mode.

In a first embodiment, the electrical torque actuator is the variable frequency drive used to start the pump-turbine in pump mode. Variable frequency drives are used to start a hydraulic machine in pump mode, and are linked to several generators to allow sequential startup of the hydraulic machines connected thereto and to lower the overall cost of the plant. The variable frequency drives are therefore already present in pump-turbine power plants and already connected to the generators. Using the variable frequency drive is advantageous because no additional part or component is required. It can also open up a secondary route to the grid for electrical energy produced by the pumped storage power plant (PSPP) in the event that the grid is still available despite the grid disconnection of the pump-turbine.

In a second embodiment, the electrical torque actuator can be a battery or an electrical resistance adequately sized.

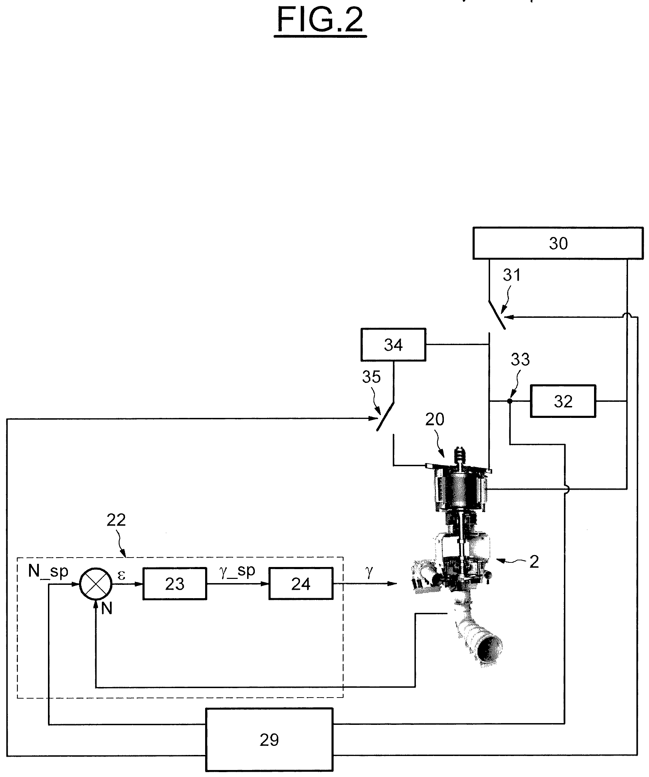

Reference is now made to figure 2 which illustrates a hydraulic installation comprising means for limiting the rotational speed of the hydraulic machine included therein.

For brevity's sake, Figure 2 does not comprise any drawing relative to the flow of water. However, the man of the art would refer to figure 1 and the related specification for matters relative to the flow of water and its control. Parts in common between figure 1 and figure 2 bear the same references.

The installation comprises control means 29 for controlling the pump-turbine 2 through a control loop 22, for determining the state of the connection between the generator 20 and the grid 30 and for controlling the grid connection means 31.

The control loop 22 comprises a guide vane controller 23 that takes as input a speed difference ε between the rotational speed N of the pump-turbine and the target rotational speed Nc and a guide vane actuator 24. The guide vane controller 23 outputs an orientation control signal γ to the guide vane actuator 24 to affect accordingly the guide vanes orientation. The control loop 22 can also command an additional waterflow regulation device.

The guide vane controller 23 may, for example, be a Proportional Integrative Derivative controller (PID).

The control loop 22 allows to command the opening of the guide vanes so that the rotational speed N of the pump-turbine 2 matches the target rotational speed.

The generator 20 linked to the pump-turbine 2 is connected to the grid 30 through grid connection means 31.

A resistor 32 and a current sensor 33 are connected in parallel to the generator 20 for determining the voltage drop at the terminals of generator 20. Alternatively, the resistor 32 and current sensor 33 can be replaced by a voltage sensor.

Generator 20 is connected to an electrical torque actuator 34 through electrical torque actuator connection means 35.

An electrical torque actuator 34 is connected to electrical torque actuator connection means 35 by one terminal, the second terminal being connected between grid connection means 31 and the generator 20.

Grid connection means and electrical torque actuator connection means are switchable between a conducting state and a non-conducting state depending on a command signal received from control means 29.

The control means 29 is able to control the installation according to the following method for limiting the rotational speed of a hydraulic machine.

The method for limiting the rotational speed of a hydraulic machine comprises the following steps.

At a first step, the command means 29 determine if the generator 20 is disconnected from the grid 30 by measuring the voltage drop at the terminals of the generator 20. Voltage measurement can be achieved directly by a voltage sensor or by a resistor connected in series with a current sensor as illustrated on figure 2. Alternatively, command means 29 can receive a signal linked to a default in the connection between the generator 20 and the grid 30, for example a signal from a tripped differential protection device.

Once it has been determined that the generator 20 is disconnected from the grid 30, the method continues at a second step during which electrical torque actuator connection means 35 is switched to a conducting- state, closing a circuit comprising the electrical torque actuator 34 and the generator 20. This allows a voltage drop to be restored at the terminals of the generator and restores the electromotive braking force in the generator 20, slowing down the pump-turbine 2. Optionally, grid connection means 31 is switched to a non-conducting state, safely insulating the electrical torque actuator 34 and the generator 20 from the grid 30.

The present method and installation apply to any hydraulic machine, including hydraulic machines with S-characteristics.

## Claims

1. Method for limiting the rotational speed on a fixed speed hydraulic machine during a transition of the operating mode following the disconnection of the hydraulic machine from the grid,
said hydraulic machine comprising a pump-turbine (2) linked to a generator (20) by a shaft, **characterized in that** said method comprises the steps of:
a) detecting a disconnection of the generator (20) from the grid (30); and
b) connecting the generator (20) to an electrical torque actuator (34) by switching electrical torque actuator connection means (35) to a conducting state.

2. Method according to claim 1, wherein, to detect a disconnection of the generator from the grid, a voltage drop at the terminals of the generator (20) is measured thanks to either a voltage sensor or a resistor connected in series with a current sensor or a signal linked to a default in the connection between the generator (20) and the grid (30) is received.

3. Method according to claim 1, wherein, to detect a disconnection of the generator from the grid, a control signal is received from a differential protection device, or from a human operated switch, and
a disconnection of the generator from the grid is determined if the control signal matches a predefined value.

4. Method according to any of the preceding claims, in which the electrical torque actuator (25) is a variable frequency drive or a static frequency converter, connected to the generator.

5. Method according to any of the preceding claims, in which the electrical torque actuator is a battery connected to the generator.

6. Method according to any of the preceding claims, in which the electrical torque actuator comprises a static frequency converter (25) and a battery, wherein the static frequency converter (25) and the battery are both connected to the generator.

7. Installation for converting hydraulic energy into electrical energy, provided with a fixed speed hydraulic machine comprising a pump-turbine (2) linked to a generator (20) by a shaft,
**characterized in that** it further comprises:
an electrical torque actuator (34) to establish a circuit with the generator,
electrical torque actuator connection means (35) for connecting the generator (20) to the electrical torque actuator (34), and
command means (29) for detecting a disconnection of the generator (20) from the grid, and for commanding the electrical torque actuator connection means (35) to connect the generator (20) to the electrical torque actuator (34).

8. Installation according to claim 7, in which the electrical torque actuator is a static frequency converter (25) connected to the generator.

9. Installation according to claim 8, in which the electrical torque actuator is a battery connected to the generator.

10. Installation according to claim 9, in which the electrical torque actuator comprises a static frequency converter (25) and a battery wherein the static frequency converter (25) and the battery are both connected to the generator.
